# EUROPÄISCHE PATENTANMELDUNG

(11) **EP 4 672 224 A1**
(43) Veröffentlichungstag der Anmeldung: **31.12.2025**
(21) Anmeldenummer: 25184519.4
(22) Anmeldetag: 23.06.2025
(51) Int. Cl.: G10K 11/00, G01M 17/10, G01N 29/22, G01N 29/265, G01N 29/28, G01N 29/04

(54) **ENTKOPPELTER PRÜFKOPF**

(30) Priorität: 26.06.2024 DE 102024118090
(71) Anmelder: Karl Deutsch Prüf- und Messgerätebau GmbH & Co. KG, 42115 Wuppertal (DE)
(72) Erfinder: SPRUCH, Wolfgang Gerhard, 14774 Brandenburg an der Havel (DE)
(74) Vertreter: Roche, von Westernhagen & Ehresmann

(57) **Zusammenfassung**

Die Erfindung betrifft unter anderem eine Vorrichtung (10) zur Ultraschallprüfung von Hohlwellen (11), insbesondere von Hohlwellen von Eisenbahn-Radsätzen (12), umfassend eine einen Ultraschall-Prüfkopf (15) mit Schallwandlern (74a, 74b) aufweisende, mit einem Einsteckende (16) voran in die Hohlwelle (11) einsteckbare Prüflanze (14), die mittels eines Antriebs (24) in Axialrichtung (25) entlang der Hohlwelle (11) verlagerbar ist, und die bei ihrer Axialverlagerung eine Rotation erfährt, wobei der Ultraschall-Prüfkopf (15) drehschlüssig mit der Prüflanze (14) verbunden ist, wobei die Schallwandler (74a, 74b) unter Zuhilfenahme von Zentriermitteln (70a, 70b) entlang einer Innenumfangsfläche (59) der Hohlwelle (11) geführt sind, und wobei zwischen dem Einsteckende (16) der Prüflanze (14) und dem Ultraschall-Prüfkopf (15) eine Einrichtung (78) zur radialen Entkopplung des Einsteckendes (16) von dem Ultraschall-Prüfkopf (15) angeordnet ist.

## Beschreibung

Die Erfindung betrifft eine Vorrichtung zur Ultraschallprüfung von Hohlwellen nach Anspruch 1.

Die Anmelderin befasst sich seit Jahrzehnten mit der Entwicklung und Fertigung von Vorrichtungen zur Ultraschallprüfung von Hohlwellen.

Insbesondere richtet sich die Erfindung an Vorrichtungen, mit denen Hohlwellen von Radsätzen, insbesondere von Radsätzen von Schienenfahrzeugen, weiter insbesondere Hohlwellen von Eisenbahnen-Radsätzen geprüft werden können.

Derartige Hohlwellen können eine Länge von beispielsweise 2 m aufweisen, und umfassen unterschiedliche Außen- und Innendurchmesser. Die Hohlwellen eines Schienenfahrzeug-Radsatzes müssen im Hinblick auf die hohen Sicherheitsanforderungen frei von Materialfehlern sein. Insbesondere dürfen keine Lufteinschlüsse, Risse, Lunker oder andere Fehlstellen in der Hohlwelle angeordnet sein, um Unfälle und Beeinträchtigungen auszuschließen.

Eine Prüfung derartiger Hohlwellen kann beispielsweise im Werk des Herstellers der Hohlwelle, aber auch beim Hersteller eines Radsatzes oder beim Betreiber des Radsatzes, oder bei einem Wartungs- oder Instandsetzungsbetrieb erfolgen.

Mit der Vorrichtung kann eine Ultraschall-Prüfung der Hohlwelle bei Inbetriebnahme, aber z.B. auch im Zuge von Wartungs- oder Instandsetzungsarbeiten durchgeführt werden.

Im Stand der Technik sind stationäre Vorrichtungen zur Durchführung derartiger Prüfungen bekannt, die mehrere 100 kg wiegen und äußerst komplex aufgebaut sind.

Dieser Erfindung liegt die Aufgabe zugrunde, eine Vorrichtung zur Ultraschallprüfung von Hohlwellen bereitzustellen, die kompakt ausgebildet ist, und die einfach transportabel und leicht handhabbar ist.

Die Erfindung löst diese Aufgabe mit den Merkmalen des Anspruches 1.

Das Prinzip der Erfindung besteht im Wesentlichen darin, die Vorrichtung völlig neu zu konzipieren. Sie kann insbesondere einen Grundkörper, einen Adapter und eine Prüflanze umfassen.

Die Prüflanze weist ein Einsteckende auf, also ein in Einsteckrichtung vorderes Ende. An diesem ist ein Ultraschall-Prüfkopf angeordnet.

Der Ultraschall-Prüfkopf kann insbesondere lösbar an der Prüflanze befestigbar sein. Für unterschiedliche, zu prüfende Hohlwellen können unterschiedliche Ultraschall-Prüfköpfe zum Einsatz kommen. Der Ultraschall-Prüfkopf wird fachmännisch auch als Sonde bezeichnet.

Die Prüflanze kann eine axiale Länge aufweisen, die der Länge der zu prüfenden Hohlwelle entspricht, oder diese übersteigt.

Die Prüflanze ist in Axialrichtung verlagerbar. Hierzu kann ein geeigneter Axialantrieb vorgesehen sein, der einen entsprechenden Vorschub, oder eine rückwärtige Bewegung, also eine Zugbewegung, der Prüflanze relativ zu der Hohlwelle bewerkstelligt. Beispielsweise kann die Prüflanze zunächst maximal in die Hohlwelle eingesetzt werden. Sodann kann die Prüfung der Hohlwelle durch die Schallwandler des Ultraschall-Prüfkopfes im Rahmen einer Zugbewegung durchgeführt werden, bis die Prüflanze vollständig aus der Hohlwelle herausgezogen ist, bzw. der Ultraschall-Prüfkopf die gesamte axiale Länge der Hohlwelle passiert und abgetastet hat.

Der Ultraschall-Prüfkopf ist drehschlüssig mit der Prüflanze verbunden. Die Prüflanze wird im Zuge ihrer Axialverlagerung rotiert. Der Ultraschall-Prüfkopf, die sog. Sonde oder Messsonde, rotiert gemeinsam mit der Prüflanze.

Aufgrund der großen Länge der Prüflanze kann es, z.B. bedingt durch Montage- oder Fertigungstoleranzen, zu einer Rotation des Einsteckendes der Prüflanze mit einer gewissen Unwucht kommen. Das freie Einsteckende der Prüflanze kann bezogen auf eine Mittellängsachse der Hohlwelle, gewisse Radialausschläge erfahren. Für den Fall, dass der Ultraschall-Prüfkopf drehfest und radialfest an dem Einsteckende der Prüflanze angeordnet ist, wird dieser Radialhub auf den Ultraschall-Prüfkopf übertragen. Hierdurch könnten gewisse, insbesondere periodische, Zunahmen und Reduzierungen der Andruckkräfte des Ultraschall-Prüfkopfes an die Innenumfangsfläche der Hohlwelle auftreten. Diese können das Messergebnis beeinträchtigen.

Die Erfindung erkennt, dass die Rotationsbewegung des freien Einsteckendes der Prüflanze derartige Radialbewegungen verursachen kann und bietet eine Lösung, den Ultraschall-Prüfkopf von diesen Bewegungen zu entkoppeln. Hierzu schlägt die Erfindung zunächst Zentriermittel an dem Ultraschall-Prüfkopf vor. Diese ermöglichen, dass der Ultraschall-Prüfkopf entlang einer Innenumfangsfläche der Hohlwelle zentriert axial verlagert und zugleich rotiert werden kann. Zudem schlägt die Erfindung eine Einrichtung zur radialen Entkopplung des Einsteckendes der Prüflanze von dem Ultraschall-Prüfkopf vor.

Die Zentriermittel können beispielsweise in Form von Federmitteln vorgesehen sein. Insbesondere können zwei axial voneinander beabstandet angeordnete Federmittel vorgesehen sein. Weiter vorteilhaft kann jeweils ein Federmittel an einem axialen Endbereich des Ultraschall-Prüfkopfes angeordnet sein.

Hierdurch wird der Ultraschall-Prüfkopf bestmöglich mittig, bezogen auf die Mittellängsachse der Hohlwelle positioniert und zentriert.

Die Federmittel können beispielsweise Federelemente umfassen. Insbesondere kann eine Anordnung einer Vielzahl von Federlaschen vorgesehen sein, die insbesondere kreisringartig um die Mittellängsachse des Prüfkopfes herum angeordnet sind und die sich jeweils mit ihrem freien Federlaschenende an der Innenumfangsfläche der Hohlwelle abstützen und auf diese Weise für eine Zentrierung des Ultraschall-Prüfkopfes im Innenraum der Hohlwelle sorgen.

Diese Ausgestaltung bietet insbesondere auch die Möglichkeit, dass der Ultraschall-Prüfkopf, zum einem bei einer Axialverlagerung, während der Messung, zum anderen aber auch bei einer zeitgleichen Rotationsbewegung, eine zentrierte Mittelposition bewahrt.

Die Erfindung sieht zum anderen vor, dass der Ultraschall-Prüfkopf durch die Einrichtung zur radialen Entkopplung von den radialen Ausschlägen des Einsteckendes befreit ist, und derartige Radialbewegungen des Einsteckendes nicht mitmachen muss.

Der Ultraschall-Prüfkopf kann daher seine Messungen in radialer Entkopplung von Schwingungsbewegungen der Prüflanze unbeeinträchtigt durchführen.

Gemäß einer vorteilhaften Ausgestaltung der Erfindung umfassen die Zentriermittel wenigstens zwei, axial voneinander beabstandete Federmittel, insbesondere Federlaschenkränze, zwischen denen die Schallwandler angeordnet sind. Diese Ausgestaltung der Erfindung ermöglicht eine besonders einfache konstruktive Realisierung.

Gemäß einer vorteilhaften Ausgestaltung der Erfindung umfassen die Federmittel Federlaschen, die sich an der Innenumfangsfläche der Hohlwelle abstützen. Diese Ausgestaltung der Erfindung ermöglicht eine besonders gute Positionierung und Zentrierung des Ultraschall-Prüfkopfes in der Hohlwelle.

Gemäß einer vorteilhaften Ausgestaltung der Erfindung sind die Schallwandler, insbesondere paarig, unter Zuhilfenahme von in Radialrichtung wirkenden Federn auf die Innenumfangsfläche der Hohlwelle hin vorgespannt. Diese Ausgestaltung der Erfindung ermöglicht zusätzliche Zentriermechanismen für eine optimierte Zentrierung des Ultraschall-Messkopfes in der Hohlwelle.

Gemäß einer vorteilhaften Ausgestaltung der Erfindung umfasst der Ultraschall-Prüfkopf zur Ankopplung der Schallwandler an der Hohlwelle eine Ölkammer. Diese Ausgestaltung der Erfindung ermöglicht eine besonders vorteilhafte Ankopplung der Signale an die Hohlwelle und eine Auskopplung der Signale aus der Hohlwelle an den Schallwandler.

Gemäß einer vorteilhaften Ausgestaltung der Erfindung umfasst der Ultraschall-Prüfkopf eine Öldurchführung. Diese Ausgestaltung der Erfindung ermöglicht eine ständige Versorgung der Schallwandler mit einem Ölfilm während der gesamten Messung.

Gemäß einer vorteilhaften Ausgestaltung der Erfindung sind die Zentriermittel zur mittigen Positionierung des Ultraschall-Prüfkopfes in der Hohlwelle ausgebildet. Diese Ausgestaltung der Erfindung ermöglicht eine optimierte Messung.

Gemäß einer vorteilhaften Ausgestaltung der Erfindung sind die Zentriermittel an den beiden axialen Endbereichen des Ultraschall-Prüfkopfes angeordnet. Diese Ausgestaltung der Erfindung gewährleistet eine besonders sichere Messung.

Gemäß einer vorteilhaften Ausgestaltung der Erfindung umfasst die Einrichtung eine kardanische Kupplung, insbesondere eine doppelkardanische Kupplung. Diese Ausgestaltung der Erfindung ermöglicht eine besonders einfache Konstruktion.

Gemäß einer vorteilhaften Ausgestaltung der Erfindung umfasst die Einrichtung einen Buchsenkörper, der schwimmend an der Prüflanze gelagert ist. Diese Ausgestaltung der Erfindung ermöglicht eine einfache Montage.

Gemäß einer vorteilhaften Ausgestaltung der Erfindung umfasst der Buchsenkörper einen Durchtrittskanal für elektrische Leitungen und/oder für einen Ölschlauch. Diese Ausgestaltung der Erfindung ermöglicht eine besonders einfache Konstruktion. Die in dem Buchsenkörper verlaufenden Leitungen und/ oder der Ölschlauch können eine Leitungslose und/ oder Schlauchlose umfassen, sodass das zu erwartende Spiel, sei es ein Axialspiel, Radialspiel oder Winkelspiel, von den Leitungen bzw. dem Ölschlauch aufgefangen werden kann.

Gemäß einer vorteilhaften Ausgestaltung der Erfindung ist der Buchsenkörper in Axialrichtung an der Prüflanze und/ oder an dem Prüfkopf unter Bereitstellung axialen Spiels unter/oder unter Bereitstellung radialen Spieles und/oder unter Ermöglichung von Winkelversatz gesichert. Diese Ausgestaltung der Erfindung ermöglicht eine besonders einfache Konstruktion.

Gemäß einer vorteilhaften Ausgestaltung der Erfindung umfasst der Buchsenkörper ein erstes Schraubgewinde für eine erste Überwurfmutter zur axialen Sicherung an der Prüflanze und ein zweites Schraubgewinde für eine zweite Überwurfmutter zur axialen Sicherung an dem Prüfkopf. Diese Ausgestaltung der Erfindung ermöglicht eine besonders einfache Konstruktion.

Gemäß einer vorteilhaften Ausgestaltung der Erfindung weist der Buchsenkörper an seinen beiden axialen Endbereichen jeweils zwei axial vorstehende Zapfen auf, die unter Bereitstellung von Spiel oder Winkelversatz in Ausnehmungen eines fest relativ zu der Prüflanze angeordneten bzw. fest relativ zu dem Prüfkopf angeordneten Ringbundes eintauchen. Diese Ausgestaltung der Erfindung ermöglicht eine besonders einfache Konstruktion.

Die Prüflanze ist gemäß einer vorteilhaften Ausgestaltung insbesondere in einem Grundkörper geführt, der einen Tunnel umfasst. Der Grundkörper wird, insbesondere unter Zuhilfenahme eines Adapters, relativ zu der Hohlwelle festgelegt. Der Adapter kann z.B. drei Befestigungsschrauben aufweisen. Der Adapter kann z.B. an einem axial äußeren Endbereich der Hohlwelle angeschraubt werden, um eine zentrierte Positionierung des Adapters auf der Hohlwelle zu ermöglichen.

Hohlwellen des Standes der Technik können in ihrer axialen Ringstirnfläche mehrere, z.B. drei oder vier, Gewinde-Bohrungen aufweisen, an denen ein Sicherungssatz für die Lager befestigt werden und axial gesichert werden kann. Zur Prüfung der Hohlwelle kann dieser Sicherungssatz z.B. abgeschraubt werden und die vorhandenen Gewindebohrungen können zur Festlegung des Adapters verwendet werden.

Von Erfindung sind auch Vorrichtungen umfasst, bei denen der Adapter auf andere Weise als über eine Schraubbefestigung an dem Axialbereich befestigbar ist. Beispielsweise kann eine Festlegung mittels Magneten oder über eine Vakuum-Befestigung erfolgen. Auch Klemm-Befestigungen sind von der Erfindung umfasst.

Der Adapter weist insbesondere einen Befestigungsabschnitt auf. Der Adapter ist über den Befestigungsabschnitt insbesondere an dem axialen Endbereich der Hohlwelle, d. h. entweder unmittelbar an dem axialen Endbereich der Hohlwelle oder relativ zu dem axialen Endbereich der Hohlwelle, festlegbar.

Der Adapter umfasst insbesondere auch einen Aufnahmeabschnitt. Über den Aufnahmeabschnitt an dem Adapter kann der Grundkörper relativ zu dem Adapter festgelegt werden. Im Zuge der Festlegung des Grundkörpers relativ zu dem Adapter erfolgt zugleich auch eine Festlegung des Grundkörpers relativ zu der Hohlwelle.

Insbesondere kann eine Befestigungsreihenfolge vorgegeben sein, wonach der Adapter zunächst an der Hohlwelle befestigt wird, und zugleich auch zentral zu einer Mittellängsachse der Hohlwelle positioniert wird, und erst anschließend der Grundkörper relativ zu dem Adapter befestigt wird. Der Adapter ermöglicht damit auch eine zentrierte Befestigung des Grundkörpers relativ zur Hohlwelle.

Damit ist insbesondere erreichbar, dass eine Mittellängsachse eines Tunnels des Grundkörpers in fluchtender Anordnung zu einer Mittellängsachse der Hohlwelle positioniert ist.

Eine Befestigung des Grundkörpers an dem Adapter kann beispielsweise über einen Bajonett-Verschluss in denkbar einfacher Weise erfolgen.

Hierzu kann z.B. an dem Adapter als Bestandteil des Bajonett-Verschlusses ein Element mit einem in Drehrichtung verlagerbaren Gewindeabschnitt vorgesehen sein, der mit dem Grundkörper kooperiert. Zum Beispiel kann ein Hebel vorgesehen sein, der eine Drehverlagerung dieses Elementes um nur wenige 10°, z.B. um 40°, ermöglicht. Durch Drehverlagerung dieses Hebels können z.B. kulissenschlitzartige, gekrümmte Aufnahmen für Nocken, die am Grundkörper angeordnet sind, verlagert werden. Mittels des Bajonett-Verschlusses kann der Grundkörper gegen den Adapter gespannt werden. Alternativ kann auch eine entsprechende Einrichtung am Grundkörper vorgesehen sein, in geometrisch invertierter Anordnung.

Eine Besonderheit einer Variante der erfindungsgemäßen Vorrichtung ist, dass die Prüflanze zusammen mit dem Grundkörper und dem Adapter unmittelbar an der Hohlwelle getragen ist. Diese Variante ist nachfolgend beschrieben. Weder der Grundkörper noch die Prüflanze oder der Adapter sind bei der erfindungsgemäßen Vorrichtung relativ zu einer bodenseitigen Aufnahmefläche abgestützt oder gelagert. Die Prüflanze selbst kann über den Grundkörper unmittelbar an der Hohlwelle getragen, gehalten und gelagert sein. Dadurch wird die Vorrichtung sehr kompakt und leichtbauend ausgebildet.

Der Grundkörper verfügt erfindungsgemäß über einen Antrieb für die Prüflanze.

Der Antrieb ist in dem Grundkörper angeordnet. Dadurch kann der Grundkörper sehr kompakt ausgebildet sein Die Prüflanze wird erfindungsgemäß in den Grundkörper eingesteckt, durchgreift den Tunnel, und kooperiert mit dem Antrieb.

Wird der Antrieb in Gang gesetzt, kann der Antrieb die Prüflanze in Axialrichtung verlagern.

Dadurch, dass der Antrieb an dem Grundkörper angeordnet ist, ist die Vorrichtung insgesamt kompakt und leicht bauend aufgebaut.

Kompliziertere Linearantriebe oder dergleichen sind nicht erforderlich. Auch besondere Führungen für die Prüflanze sind erfindungsgemäß nicht erforderlich.

Die Vorrichtung kann auf einfache Weise an der Hohlwelle montiert und wieder demontiert werden.

Im einfachsten Fall verfügt die Prüflanze über ein Außengewinde. Das Außengewinde kann sich entlang der gesamten Axialerstreckung der Prüflanze erstrecken. Zudem kann in der Prüflanze eine Axialnut angeordnet sein. Auch die Axialnut kann sich entlang der axialen Länge der Prüflanze erstrecken.

Der Antrieb kann einen Drehantrieb umfassen, der einen Drehmitnehmer aufweist. Der Drehmitnehmer kann in der Axialnut der Prüflanze axial frei verschieblich angeordnet sein. Zugleich kann der Drehmitnehmer drehschlüssig mit der Prüflanze verbunden sein.

Der Drehantrieb kann z.B. einen Elektromotor umfassen und dessen Ausgangswelle in Rotation versetzen. Diese treibt ein Zahnrad an, das den Drehmitnehmer in Rotation versetzt. Hierdurch wird die Prüflanze drehmitgenommen.

Die Prüflanze kann in einer axial festgehaltenen Schraubenmutter, oder in einem axial festgehaltenen Schraubgewinde geführt sein. Infolge einer Drehung der Prüflanze über den Drehantrieb wird diese Rotation durch die axial festgehaltene Schraubmutter in eine Axialbewegung der Prüflanze übersetzt. Jede Rotation der Prüflanze hat also zwingend eine Axialverlagerung der Prüflanze zur Folge.

Vorteilhaft kann der Drehantrieb in beide Drehrichtungen mit der Prüflanze kooperieren. Die Prüflanze kann also in Vorschubrichtung und in Zugrichtung betrieben werden.

Gemäß einer vorteilhaften Ausgestaltung der Erfindung ist der Grundkörper mittels des Adapters derart relativ zu der Hohlwelle positionierbar, dass eine Mittellängsachse des Tunnels in fluchtender Anordnung zu einer Mittelachse der Hohlwelle steht. Dies ermöglicht eines besonders einfache geometrische Positionierung des Grundkörpers relativ zur Hohlwelle. Damit kann der Prüfkopf optimiert zentriert geführt werden.

Gemäß einer vorteilhaften Ausgestaltung der Erfindung ist der Prüfkopf mittels einer Steckverbindung lösbar an der Prüflanze befestigbar.

Gemäß einer vorteilhaften Ausgestaltung der Erfindung ist der Prüfkopf an einem Einsteckende der Prüflanze, insbesondere lösbar, angeordnet ist. Diese Ausgestaltung ermöglicht eine herkömmliche Betriebsweise der erfindungsgemäßen Vorrichtung.

Für unterschiedliche zu prüfende Hohlwellen können unterschiedliche Prüfkörper vorgesehen sein. Beispielsweise können unterschiedliche Prüfköpfe unterschiedliche Abmessungen der Hohlwelle berücksichtigen. Auch können unterschiedliche Prüfköpfe unterschiedliche Messverfahren durchführen.

Gemäß einer vorteilhaften Ausgestaltung der Erfindung ist der Grundkörper an dem Aufnahmeabschnitt des Adapters mittels eines Bajonett-Verschlusses anbringbar. Dies ermöglicht eine besonders einfache Montage und Demontage des Grundkörpers relativ zu dem Adapter.

Gemäß einer vorteilhaften Ausgestaltung der Erfindung weist die Prüflanze eine axiale Länge auf, die wenigstens der Länge der Hohlwelle entspricht. Dies ermöglicht eine Prüfung der Hohlwelle in einem Zug.

Gemäß einer vorteilhaften Ausgestaltung der Erfindung umfasst der Prüfkopf einen Ultraschallwellen-Sender und einen Ultraschallwellen-Empfänger. Dies ermöglicht einen Rückgriff auf herkömmliche Elemente von Ultraschall-Prüfköpfen.

Gemäß einer vorteilhaften Ausgestaltung der Erfindung erfährt der Prüfkopf im Zuge einer Axialbewegung der Prüflanze eine Rotation. Dies ermöglicht eine Verwendung eines besonders einfach ausgebildeten Drehantriebes unter Verwendung einer einfach ausgebildeten Schraubmutter.

Gemäß einer vorteilhaften Ausgestaltung der Erfindung erfährt die Prüflanze im Zuge ihrer Axialbewegung eine Rotation. Diese Ausgestaltung der Erfindung ermöglicht eine besonders optimierte Durchführung der Ultraschall-Messung.

Gemäß einer vorteilhaften Ausgestaltung der Erfindung ist der Prüfkopf drehschlüssig mit der Prüflanze verbunden. Dies ermöglicht eine besonders einfache Konstruktion einer erfindungsgemäßen Vorrichtung.

Gemäß einer vorteilhaften Ausgestaltung der Erfindung weist die Prüflanze einen Hohlraum auf, in dem elektrische Leitungen und/oder eine Ölleitung zur Versorgung des Prüfkopfes untergebracht sind. Dies ermöglicht eine Bereitstellung von Betriebsspannung an dem Prüfkopf und eine Bereitstellung einer Ölversorgung über eine Drehdurchführung am hinteren Ende der Prüflanze.

Gemäß einer vorteilhaften Ausgestaltung der Erfindung weist die Prüflanze an ihrem, in Einsteckrichtung hinteren Ende eine Drehdurchführung auf. Dies ermöglicht eine besonders einfache Konstruktion einer erfindungsgemäßen Vorrichtung.

Gemäß einer vorteilhaften Ausgestaltung der Erfindung verfügt die Drehdurchführung über Schleifkontakte für elektrische Leitungen und/oder über eine dreh-abgedichtete Fluidkupplung für eine Ölleitung. Dies ermöglicht eine besonders einfache Konstruktion einer erfindungsgemäßen Vorrichtung.

Gemäß einer vorteilhaften Ausgestaltung der Erfindung umfasst der Antrieb, der als Drehantrieb ausgebildet ist, insbesondere einen Elektromotor. Dies ermöglicht eine besonders einfache Ausbildung einer erfindungsgemäßen Vorrichtung.

Gemäß einer vorteilhaften Ausgestaltung der Erfindung umfasst der Antrieb einen insbesondere um eine Mittellängsachse des Tunnels rotierenden Mitnehmer, der für eine Drehmitnahme der Prüflanze drehschlüssig mit der Prüflanze verbunden ist. Dies ermöglicht eine Bereitstellung einer konstruktiv einfachen Ausbildung eines Drehantriebes.

Gemäß einer vorteilhaften Ausgestaltung der Erfindung ist der Mitnehmer in einer Axialnut der Prüflanze axial verschieblich angeordnet. Diese Ausgestaltung der Erfindung ermöglicht eine besonders einfache Konstruktion und eine einfache Montage.

Gemäß einer vorteilhaften Ausgestaltung der Erfindung weist die Prüflanze eine Außengewinde auf. Diese Ausgestaltung der Erfindung ermöglicht eine besonders einfache Konstruktion der erfindungsgemäßen Vorrichtung.

Gemäß einer vorteilhaften Ausgestaltung der Erfindung umfasst der Antrieb ein axial fest positioniertes Schraubgewinde, insbesondere eine axial fest positionierte Schraubmutter, in der die Prüflanze geführt ist. Diese Ausgestaltung der Erfindung ermöglicht eine Ausbildung eines Antriebs als Drehantrieb. Dies ermöglicht eine einfache Konstruktion. Die Schraubmutter dient zur Übersetzung der Rotationsbewegung der Prüflanze in eine Axialbewegung. Die Schraubmutter ist daher nicht Bestandteil des Drehantriebes und kann von diesem gesondert ausgebildet sein.

Gemäß einer vorteilhaften Ausgestaltung der Erfindung umfasst der Antrieb eine Entkopplungsvorrichtung, mit der die Prüflanze von dem Antrieb zur Ermöglichung einer freien, handgetriebenen Axialverlagerung entkoppelbar ist. Dies ermöglicht z.B. die Durchführung einer Ultraschall-Messung an einer Hohlwelle auf herkömmliche, handgetriebene Weise. Bei Unklarheiten der Auswertung der Prüfergebnisse oder auch für Nachmessungen kann durch eine handgeführte detailliertere Nachmessung bei Bedarf eine Überprüfung auf herkömmliche Art durchgeführt werden.

Eine Betätigung der Kopplungsvorrichtung kann beispielsweise auf unmittelbare mechanische Weise das Außengewinde der Prüflanze von dem Antrieb entkoppeln. Die Betätigungseinrichtung kann aber gegebenenfalls auch elektrische oder elektronische Komponenten umfassen, z.B. um für eine Weiterleitung eines Steuerkommandos zu sorgen. Bei einer Ausführungsform kann die Entkopplungsvorrichtung einen Mechanismus umfassen, mit dem die Schraubmutter oder das Schraubgewinde außer Eingriff mit dem Außengewinde der Prüflanze bringbar ist. Wenn die Entkopplungsvorrichtung betätigt ist, kann die Prüflanze mit ihrem Außengewinde frei durch das Innengewinde der Schraubmutter hindurchgeschoben werden, ohne dass ein Eingriff erfolgt. Da der Mitnehmer axial verschieblich in der Nut der Prüflanze angeordnet ist, ist die Prüflanze infolge der Betätigung der Kopplungsvorrichtung vollständig von dem Antrieb entkoppelt.

Gemäß einer vorteilhaften Ausgestaltung der Erfindung ist mittels der Entkopplungsvorrichtung die Schraubmutter expandierbar. Dies ermöglicht eines besonders einfache konstruktive Ausgestaltung einer Entkopplungsvorrichtung.

Gemäß einer vorteilhaften Ausgestaltung der Erfindung weist die Vorrichtung eine Steuerung auf, die insbesondere in dem Grundkörper oder in einem über die Drehdurchführung an die Prüflanze angebundenen Beistellgerät angeordnet ist. Diese Ausgestaltung der Erfindung ermöglicht eine besonders einfache Konstruktion einer erfindungsgemäßen Vorrichtung.

Die Steuerung kann Bestandteil einer Auswerteeinheit oder Auswerteelektronik sein, oder mit einer solchen Auswerteeinheit kooperieren. Eine Auswerteeinheit kann Bestandteil des Grundgerätes oder Bestandteil eines Beistellgerätes sein. Die Vorrichtung kann z.B. auch über einen Anschluss verfügen, über den eine Auswerteeinheit mit dem Grundgerät oder mit dem Beistellgerät verbindbar ist. Der Grundkörper oder das Beistellgerät können auch einen Speicher für Messdaten und/ oder eine Recheneinheit zur Verarbeitung von Messdaten umfassen.

Gemäß einer vorteilhaften Ausgestaltung der Erfindung weist die Vorrichtung ein Display auf, das insbesondere an dem Grundkörper oder an einem gesonderten, z.B. über die Drehdurchführung an die Prüflanze angebundenen Beistellgerät angeordnet oder daran anschließbar ist. Diese Ausgestaltung der Erfindung ermöglicht eine besonders komfortable Handhabung.

Gemäß einer vorteilhaften Ausgestaltung der Erfindung ist der Adapter als Ringkörper ausgebildet. Diese Ausgestaltung der Erfindung ermöglicht eine besonders einfache Konstruktion.

Gemäß einer vorteilhaften Ausgestaltung der Erfindung beträgt das Gesamtgewicht der Vorrichtung nicht mehr als 15 kg, insbesondere nicht mehr als 10 kg. Diese Ausgestaltung der Erfindung ermöglicht eine besonders komfortable Handhabung und einen besonders einfachen Transport der Vorrichtung.

Gemäß einer vorteilhaften Ausgestaltung der Erfindung ist die Prüflanze entlang ihrer axialen Länge in wenigstens zwei Segemente teilbar ausgebildet. Diese Ausgestaltung der Erfindung ermöglicht z.B. einen handgetragenen, unkomplizierten Transport zu einem Einsatzort. Damit kann beispielsweise von Fachpersonal an einem beliebigen Ort eine Messung durchgeführt werden.

Weitere Vorteile der erfindungsgemäßen Vorrichtung ergeben sich anhand der nicht zitierten Unteransprüche sowie aus der nachfolgenden Beschreibung der in den Zeichnungen dargestellten Ausführungsbeispiele.

Darin zeigen:
- Fig. 1: In einer teilgeschnittenen, schematischen Ansicht ein Ausführungsbeispiel einer erfindungsgemäßen Vorrichtung mit einer Prüflanze, deren Prüfkopf im Bereich eines rechten Endes einer Hohlwelle eines Radsatzes angeordnet ist,
- Fig. 2: das Ausführungsbeispiel der Fig. 1, bei dem der Prüfkopf vollständig in die Hohlwelle hinein eingeschoben ist und sich am linken Ende der Hohlwelle befindet,
- Fig. 3: das Ausführungsbeispiel der Fig. 2, bei dem der Prüfkopf etwa mittig in der Hohlwelle angeordnet ist,
- Fig. 4: das Ausführungsbeispiel der Fig. 1, in einer schematischen, teilgeschnittenen, abgebrochenen, vergrößerten Detaildarstellung, etwa gemäß Teilkreis IV in Fig. 1, unter detaillierter Darstellung des Grundkörpers zur Veranschaulichung von Drehantrieb und Schraubmutter, und unter detaillierter Darstellung des Adapters,
- Fig. 5: in einer teilgeschnittenen, schematischen Ansicht etwa entlang Schnittlinie V-V in Fig. 4 den Drehantrieb,
- Fig. 6: in einer teilgeschnittenen schematischen Ansicht etwa entlang Schnittlinie VI-VI in Fig. 4, eine Schraubmutter unter Veranschaulichung mehrerer einzelner Segmente der Schraubmutter,
- Fig. 7: die Schraubmutter der Fig. 6 in einem expandierten Zustand,
- Fig. 8: das Ausführungsbeispiel der Vorrichtung in einer Darstellung gemäß Fig. 1, wobei zur Ermöglichung einer handgetriebenen Axialverlagerung der Antrieb von der Prüflanze entkoppelt ist, und wobei zusätzlich die Hand einer Bedienperson dargestellt ist,
- Fig. 9: in Alleinstellung die Prüflanze, in einer teilgeschnittenen, schematischen Ansicht unter Darstellung zweier Teilsegmente, die voneinander mechanisch entkoppelt sind,
- Fig. 10: die Prüflanze der Fig. 9, in einem komprimierten Zustand,
- Fig. 11: ein weiteres Ausführungsbeispiel einer erfindungsgemäßen Vorrichtung, in einer Darstellung gemäß Fig. 1 unter Darstellung eines Beistellgerätes,
- Fig. 12: in einer teilgeschnittenen schematischen Ansicht den Axialbereich der Prüflanze gemäß Teilkreis XII in Fig. 1, zur Veranschaulichung des inneren Aufbaus der Prüflanze,
- Fig. 13: in einer konkretisierten und gegenüber Fig. 3 geänderten Darstellung den Ultraschall-Prüfkopf, das Einsteckende der Prüflanze und eine Einrichtung zur radialen Entkopplung des Einsteckendes der Prüflanze von dem Ultraschall-Prüfkopf in einer schematischen Funktionsdarstellung, etwa entlang des Ausschnittsbereiches XIII in Fig. 3,
- Fig. 14: in einer detaillierten, schematischen, teilgeschnittenen Darstellung, gemäß Teilkreis XIV in Fig. 13, den Ultraschall-Prüfkopf,
- Fig. 15: in einer detaillierten, schematischen, teilgeschnittenen Ansicht, die Einrichtung zur Radialentkopplung, in einem Verbindungsbereich zwischen dem Einsteckende der Prüflanze und dem Prüfkopf, etwa gemäß Teilkreis XV in Fig. 13,
- Fig. 16: in einer teilgeschnittenen, schematischen Endansicht den Prüfkopf mit einem Zentriermittel, etwa entlang Ansichtspfeil XVI in Fig. 14,
- Fig. 17: eine Kardanbuchse als Bestandteil der Einrichtung zur radialen Entkopplung in Einzeldarstellung gemäß Fig. 15,
- Fig. 18: die Kardanbuchse der Fig. 17 in Draufsicht, etwa gemäß Ansichtspfeil XVIII in Fig. 17,
- Fig. 19: die Kardanbuchse der Fig. 18 in Draufsicht, etwa gemäß Ansichtspfeil XIX in Fig. 18,
- Fig. 20: in einer teilgeschnittenen Ansicht den Verbindungsbereich zwischen der Kardanbuchse und einem dem Prüfkopf zugewandten Ringbund eines Axialstücks, zur Illustration einer Drehmitnahme, etwa gemäß Schnittlinie XX in Fig. 15, und
- Fig. 21: in einer Darstellung gemäß Fig. 20 den rückwärtigen Bereich der Kardanbuchse und den Ringbund der Prüflanze, in teilgeschnittener schematischer Ansicht, etwa entlang Schnittline XXI in Fig. 15.

Die Ausführungsbeispiele der Erfindung werden anhand der nachfolgenden Beschreibung der Zeichnungen erläutert:
Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Merkmale, die nur in Bezug zu einem Ausführungsbeispiel beschrieben sind, können im Rahmen der Erfindung auch bei jedem anderen Ausführungsbeispiel der Erfindung vorgesehen werden. Derartig geänderte Ausführungsbeispiele sind - auch wenn sie in den Zeichnungen nicht dargestellt sind - von der Erfindung mit umfasst.

Alle offenbarten Merkmale sind für sich erfindungswesentlich. In die Offenbarung der Anmeldung wird hiermit auch der Offenbarungsinhalt der zugehörigen Prioritätsunterlagen (Abschrift der Voranmeldung) sowie der zitierten Druckschriften und der beschriebenen Vorrichtungen des Standes der Technik vollinhaltlich mit einbezogen, auch zu dem Zweck, einzelne oder mehrere Merkmale dieser Unterlagen in einen oder in mehrere Ansprüche der vorliegenden Anmeldung mit aufzunehmen.

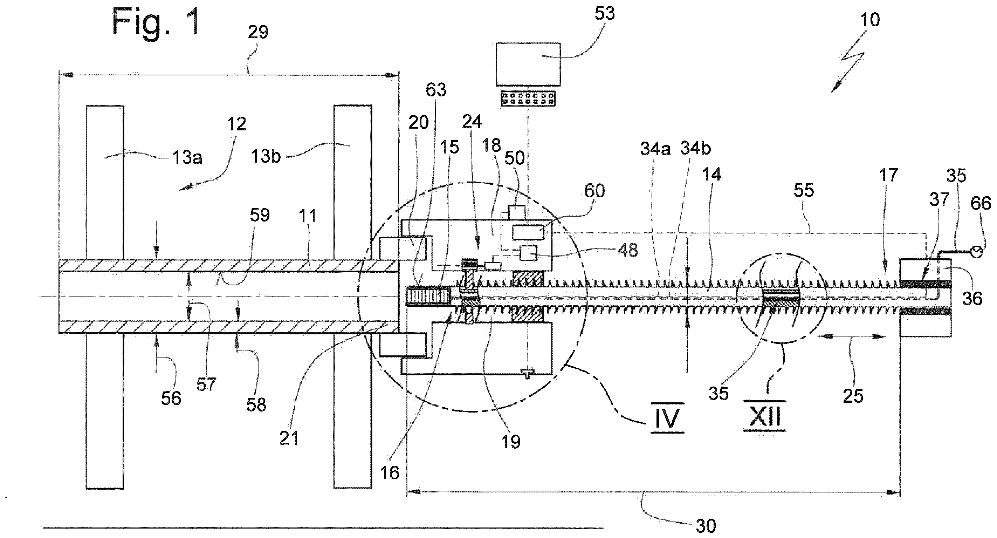

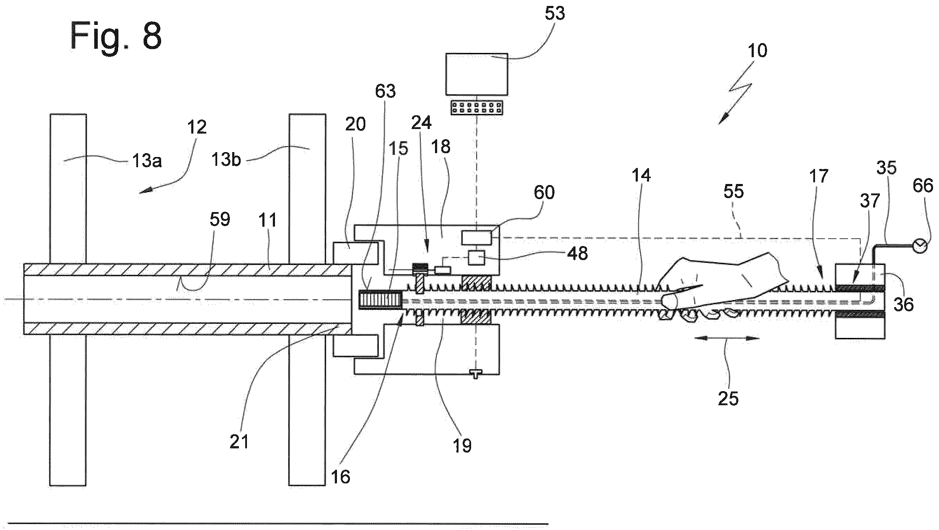

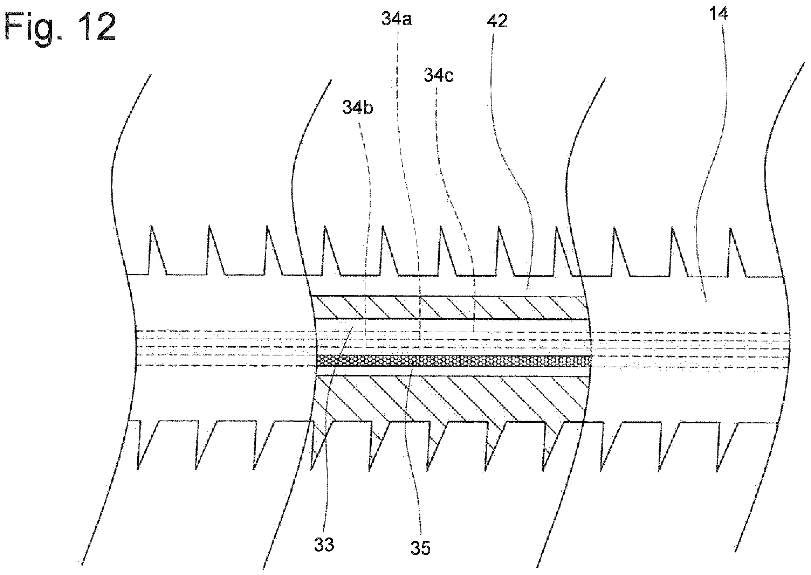

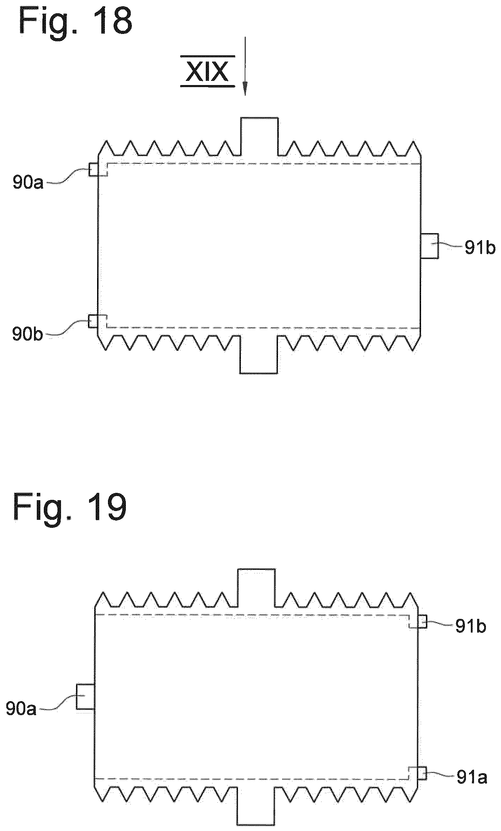

Ausführungsbeispiele erfindungsgemäßer Vorrichtungen sind in den Zeichnungen in ihrer Gesamtheit mit dem Bezugszeichen 10 bezeichnet und in den Figuren 1 bis 21 dargestellt.

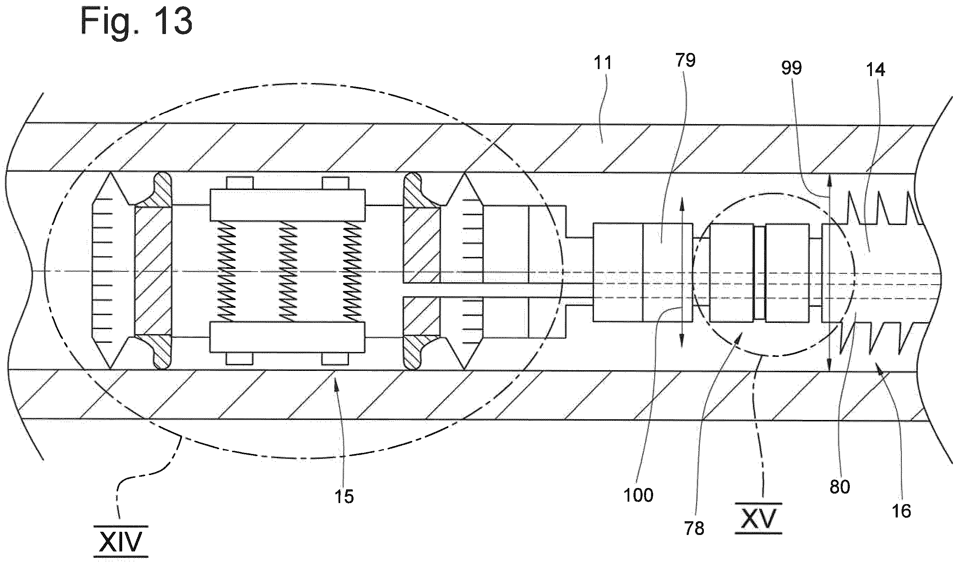

Zunächst soll anhand der Figuren 1 bis 12 die wesentliche Funktionsweise eines Ausführungsbeispiels einer erfindungsgemäßen Vorrichtung 10 erläutert werden; sodann wird konkret anhand der Figuren 13 bis 21 ein Ausführungsbeispiel der Vorrichtung 10 detailliert erläutert.

Die Vorrichtung 10 dient zur Ultraschallprüfung des Materials einer Hohlwelle 11. Die Hohlwelle 11 ist insbesondere Bestandteil eines Radsatzes 12.

Weiter vorteilhafter Weise handelt es sich um einen Radsatz 12 eines Schienenfahrzeugs, z.B. einer Straßenbahn oder einer Eisenbahn. Der Radsatz 12 kann gemäß Figur 1 zwei - oder mehr - Räder 13a, 13b umfassen, die von der Hohlwelle 11 getragen sind. Lager und dergleichen weitere Elemente des Radsatzes 12 sind der Übersichtlichkeit halber nicht dargestellt.

Die Hohlwelle 11 besteht aus Metall, und umfasst einen Außendurchmesser 56, ein Innendurchmesser 57, und eine Wandstärke 58. Die angegebenen Maße können variieren. Insbesondere können diese von Radsatz zu Radsatz unterschiedlich sein.

Eine Materialprüfung der Hohlwelle 11 ist unerlässlich, um die Sicherheit des Schienenfahrzeuges zu gewährleisten. Es dürfen im Material der Hohlwelle 11 z.B. keine Materialrisse, Lufteinschlüsse, Lunker oder sonstige Fehler enthalten sein.

Diese können auf herkömmliche Art und Weise mittels eines Ultraschall-Prüfverfahrens ermittelt werden.

Die Vorrichtung 10 umfasst zur Durchführung der Messung eine Prüflanze 14. Die Prüflanze 14 weist eine axiale Länge 29 auf, die im Wesentlichen der axialen Länge 30 der Hohlwelle 11 entspricht, diese z.B. aber auch übersteigen kann.

Die axiale Länge 30 der Prüflanze 14 - gemessen inklusive Prüfkopf 15 - beträgt beispielsweise 200-230 cm, z.B. 215 cm.

Die Prüflanze 11 umfasst ein vorderes Ende 16, das auch als Einsteckende 16 bezeichnet wird, und ein hinteres Ende 17. Am vorderen Ende 16 der Prüflanze 14 ist der Prüfkopf 15 angeordnet.

Der Prüfkopf 15, der auch als Sonde bezeichnet wird, ist lediglich schematisch angedeutet. Er ist tatsächlich, anders als dargestellt, in Radialrichtung größer ausgebildet und liegt während der Messungen mit seiner Außenumfangsfläche unmittelbar an der Innenumfangsfläche 59 der Hohlwelle 11 an.

Insbesondere kann eine Ankopplung der in Fig. 1 im Einzelnen nicht dargestellten Schallköpfe oder Schallwandler mittels eines Ölfilms erfolgen, so dass der eigentliche Schallkopf, über einen Ölfilm geführt, zur Ankoppelung der Ultraschallsignale, in Axialrichtung 25 an der Innenumfangsfläche 59 der Hohlwelle 11 entlang bewegt wird.

Der Prüfkopf 15 ist, was in Figur 1 nicht dargestellt ist, lösbar mit dem Einsteckende 16 der Prüflanze 14 verbindbar.

Die lösbare Verbindung kann insbesondere durch eine nicht dargestellte Steckverbindung bewerkstelligt werden. Die Steckverbindung kann insbesondere zwischen dem in Figur 13 mit 15 bezeichneten Ultraschall-Prüfkopf und dem in Figur 13 mit dem Bezugszeichen 79 bezeichneten Axialstück angeordnet sein. Die Steckverbindung kann eine mechanische Ankopplung, eine elektrische bzw. elektronische Ankopplung, auch eine Fluid-Schnell-Kopplung für einen Ölschlauch umfassen.

Insbesondere können zur Prüfung unterschiedlicher Hohlwellen 11 unterschiedliche Prüfköpfe 15 mit unterschiedlichen Außendurchmessern eingesetzt werden. Es können auch unterschiedliche Prüfköpfe 15 eingesetzt werden, die unterschiedliche Messverfahren verwenden.

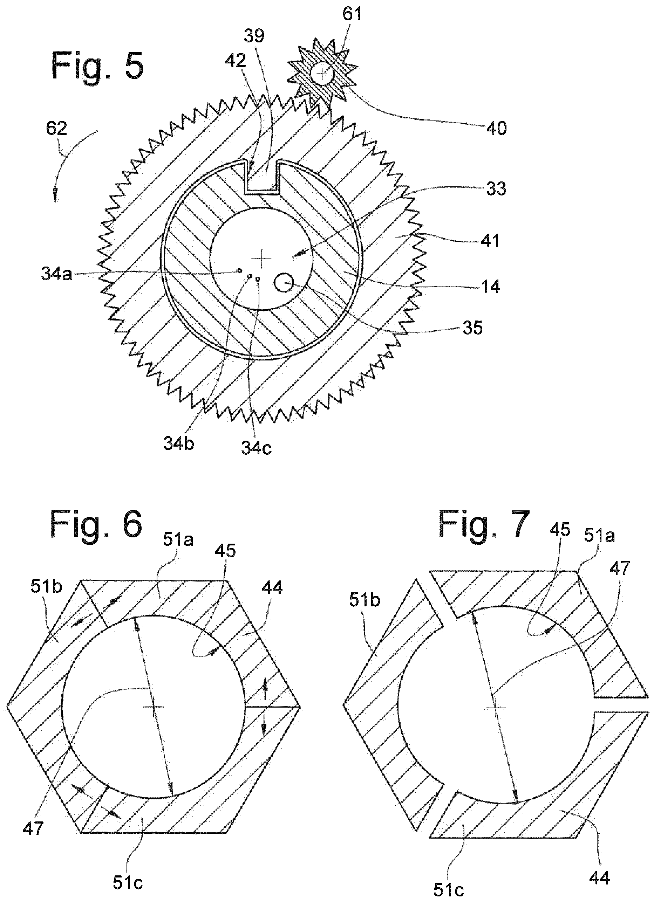

Der Prüfkopf 15 wird über lediglich angedeutete elektrische Leitungen 34a, 34b, 34c (vgl. Fig. 5) mit Betriebsspannung versorgt. Hierzu umfasst die Prüflanze 15 einen Hohlraum 33, der sich entlang der gesamten axialen Erstreckung der Prüflanze 14 erstreckt, und durch den hindurch die elektrischen Leitungen 34a, 34b, 34c geführt sind. Die Führung erfolgt bis zu einer am hinteren Ende 17 der Prüflanze angeordneten Drehdurchführung 36.

Im Bereich der Drehdurchführung 36 sind die elektrischen Leitungen 34a, 34b, 34c über im Einzelnen nicht dargestellte Schleifkontakte nach außen geführt und werden über eine Anschlussleitung 55 einer Spannungsversorgung 60 am Grundkörper 18 zugeführt bzw. sind mit der Steuerung 48 verbunden.

Die Zahl der elektrischen Leitungen ist beliebig. Die elektrischen Leitungen übertragen nicht nur Betriebsspannung, sondern auch die Signale, und zwar insbesondere Steuersignale und/ oder Messignale.

So erhält beispielsweise der Prüfkopf 15 von der Steuerung 48 Daten und Informationen, zu bestimmten Zeitpunkten Ultraschallsignale zu emittieren. Auch die vom Prüfkopf 15 erlangten Messdaten von reflektierten Schallwellen, können über die elektrischen Leitungen 34a, 34b, 34c, durch die Drehdurchführung 36 hindurch, an die Steuerung 48 weitergeleitet werden.

Die elektrischen Leitungen 34a, 34b, 34c sind lediglich schematisch zu verstehen. Beispielsweise kann es sich um ein Kabel mit beispielsweise 16 unterschiedlichen elektrischen Adern handeln.

Der Prüfkopf 15 wird bei dem Ausführungsbeispiel der Fig. 1 über einen innerhalb des Hohlraumes 33 verlaufenden Ölschlauch 34 mit Öl versorgt.

Die Drehdurchführung 36 umfasst bei diesem Ausführungsbeispiel auch eine nicht dargestellte Fluidkupplung, um von einer ausgangsseitig der Drehdurchführung 36 angeordneten, angedeuteten Ölpumpe 66 den Prüfkopf 15 mit Öl zu versorgen.

Eine Besonderheit eines Ausführungsbeispiels der erfindungsgemäßen Vorrichtung 10 besteht in der Ausgestaltung und in der Anordnung des Antriebs 24 für die Prüflanze 14.

Die Prüflanze 14 ist entlang ihrer gesamten oder nahezu gesamten axialen Länge mit einem Außengewinde 43 versehen. Die Prüflanze 14 ist darüber hinaus in einer Schraubmutter 44, die ein Innengewinde 45 aufweist, geführt. Die Schraubmutter 44 ist bezogen auf ihre Axialposition relativ fest zu einem Grundkörper 18 gehalten und in diesem Grundkörper 18 angeordnet.

Bestandteil des Grundkörpers 18 ist darüber hinaus ein Antrieb 24.

Der Antrieb 24 umfasst einen Elektromotor 38, der über seine Ausgangswelle 61 ein Ritzel 40 antreibt. Das Ritzel 40 umfasst Zähne, die mit Zähnen eines Zahnrades 41 zusammenwirken. Eine Betätigung des Elektromotors 38 führt somit zu einer Drehung der Ausgangswelle 61, und damit zu einer Drehung des Ritzels 40. Dieses überträgt seine Drehbewegung gegenläufig auf das Zahnrad 41.

Figur 5 macht deutlich, dass ein Mitnehmer 39 mit dem Zahnrad 41 verbunden ist. Dieser ragt in eine axiale Nut 42 der Prüflanze 14 hinein. Der Mitnehmer 39 ist relativ zur Prüflanze 14 frei axial verschiebbar in der Prüflanze 14 angeordnet. Der Mitnehmer 39 ist aber drehschlüssig mit der Prüflanze 14 verbunden.

Eine Rotation des Mitnehmers 39 im Rotationssinne 62 führt also zu einer Drehmitnahme der Prüflanze 14, und zugleich aufgrund der axial festgehaltenen Schraubenmutter 44 zu einer Axialverlagerung der Prüflanze 14.

Der Elektromotor 38 kann in beide Drehsinne betrieben werden, sodass eine Einfahr-Bewegung und eine Ausfahr-Bewegung der Prüflanze 14 in Relation zu der zu prüfenden Hohlwelle 11 durchgeführt werden kann.

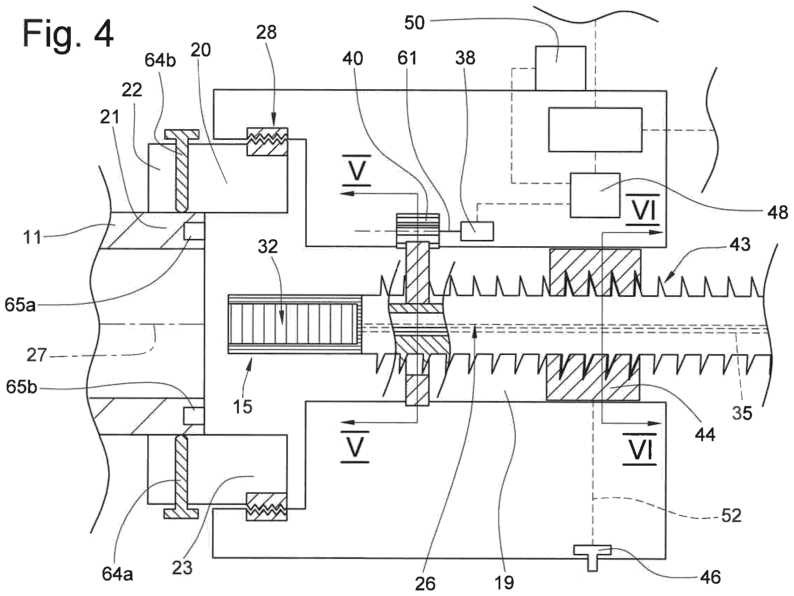

Die Vorrichtung 10 umfasst einen Adapter 20, der insbesondere als Ringkörper ausgebildet ist. Der Adapter 20 umfasst einen Befestigungsabschnitt 22, der insbesondere unmittelbar an einem axialen Endbereich 21 der Hohlwelle 11 festlegbar ist. Insbesondere kann der Befestigungsabschnitt 22 über mehrere, z.B. wenigstens drei betätigbare Schrauben auf denkbar einfache Weise an dem Axialabschnitt 21 der Hohlwelle 11, oder jedenfalls relativ zu dem Axialabschnitt 21 der Hohlwelle 11 befestigt werden. Figur 4 veranschaulicht zwei in Radialrichtung orientierte Schrauben 64a, 64b, wobei die Zahl der Schrauben 64 vom Fachmann geeignet gewählt wird. Tatsächlich wird erfindungsgemäß - anders, als dargestellt - vorzugsweise eine Schraubbefestigung vorgesehen, bei der die Schrauben 64a, 64b in Axialrichtung orientiert sind und z.B. in bei 65a, 65b angedeutete Gewindebohrungen unmittelbar an der Ringstirnfläche der zu prüfenden Hohlwelle 11 eingeschraubt werden.

Der Adapter 20 wird im Zuge seiner Befestigung so positioniert, dass eine Zentrierung stattfindet. Der Adapter 20 wird im Zuge seiner Befestigung also zentriert, relativ zu der Hohlwelle 11 befestigt.

Der Adapter 20 umfasst darüber hinaus einen Aufnahmeabschnitt 23, der zur Festlegung des Grundkörpers 18 an dem Adapter dient. Der Aufnahmeabschnitt 23 kann insbesondere Bestandteil eines Bajonett-Verschlusses 28 sein oder einen solchen ausbilden.

Zunächst wird der Adapter 20 an der Hohlwelle 11 festgelegt. Sodann wird der Grundkörper 18 durch eine einfache Bajonett-Verriegelungsbewegung, z.B. durch eine Drehung eines im Detail nicht dargestellten Verschlusses um wenige Grad, z.B. um 40°, relativ zu dem Adapter 20, an dem Adapter 20 festgelegt. Insbesondere kann an dem Adapter auch ein verlagerbares Bajonett- Verriegelungselement angeordnet sein.

Wie bei solchen Verschlüssen üblich, kann an einem der beiden Teile, also entweder an dem Grundkörper oder an dem Adapter, ein Vorsprung oder Zapfen, allgemein ein Kulissenstein, angeordnet sein, wobei an dem jeweils anderen der beiden Teile ein Kulissenschlitz angeordnet ist, in dem der Kulissenstein geführt ist.

Von der Erfindung ist insbesondere eine Modulbauweise der Vorrichtung umfasst, sodass für einen Grundkörper 18 unterschiedliche Adapter 20 vorgesehen sind, um in Anpassung an unterschiedliche Dimensionen zu prüfender Hohlwellen 11 entsprechende Festlegungen zu ermöglichen. Dabei kann der Adapter 20 jeweils einen Aufnahmeabschnitt 23 aufweisen, der bei allen Adaptern 20 gleich gehalten ist, sodass eine definierte mechanische Schnittstelle 23 am Adapter 20 zur Festlegung des Grundkörpers 18 vorgesehen ist.

Im Zuge der Festlegung des Grundkörpers 18 an den Adapter erfolgt eine exakte zentrierte Positionierung des Grundkörpers 18 relativ zur Hohlwelle 11.

Insbesondere ist eine Mittellängsachse 26 eines Tunnels 19 an dem Grundkörper 18, durch den hindurch die Prüflanze 15 geführt wird, in Flucht zu der Mittellängsachse 27 der Hohlwelle 11 angeordnet.

Die Funktionsweise der Vorrichtung 10 ist wie folgt:
Zunächst wird der Adapter 20 an dem Radsatz 12, insbesondere an den axialen Endbereich 21 der Hohlwelle 11 festgelegt. Sodann wird der Grundkörper 18 an dem Adapter 20 festgelegt.

Schließlich kann die Prüflanze 14 in den Tunnel 19 eingesetzt werden. Nachfolgend wird über eine Steuerung 48 der Vorrichtung 10 der Antrieb 24 angesprochen.

Der Antrieb 24 setzt den Elektromotor 38 in Gang, dreht die Prüflanze 14, die infolge des Zusammenwirkens von Außengewinde 43 und Schraubmutter 44 eine Axialverlagerung gemäß dem Doppelpfeil 25 erfährt.

Während der Drehung der Prüflanze 15 wird z.B. zu regelmäßigen Zeitpunkten von dem Prüfkopf 15 ein Ultraschall-Signal auf die Innenumfangsfläche 59 der Hohlwelle abgegeben. Es kann ein sogenannter "shot" abgesetzt werden, oder ein "pulse":

Infolge der Reflexion der Schallwellen kann ein entsprechendes Antwortsignal der Schallwellen aufgenommen werden. Die entsprechende Signalübermittlung der Messsignale erfolgt über elektrische Leitungen 34a, 34b, 34c zur Steuerung 48. Die Steuerung 48 kann die Messdaten und Signale aufnehmen, gegebenenfalls speichern und gegebenenfalls auch verarbeiten und gegebenenfalls auch unmittelbar anzeigen.

Die Vorrichtung 10 kann auch eine Anzeigevorrichtung oder ein Display 50 aufweisen. Die Steuerung 48 merkt sich insbesondere auch, an welcher Axialposition der Prüflanze 14, und in welcher Drehposition der Prüflanze 14, relativ zur Hohlwelle 11, der entsprechende "pulse" oder "shot" abgesetzt und die Messwerte erhalten worden sind. Ergibt die Messung, dass Materialfehlstellen in der Hohlwelle bestehen, weiß die Steuerung 48, an welcher Axialposition der Prüflanze 14 relativ zu der Hohlwelle 11 und unter welchem Drehwinkel die Fehlstelle angeordnet ist. Dies erleichtert beispielsweise eine genauere Nachmessung.

Die Daten werden von der Steuerung 48 insbesondere auch zur Dokumentation vorhaltbar bereitgestellt und/ oder gespeichert.

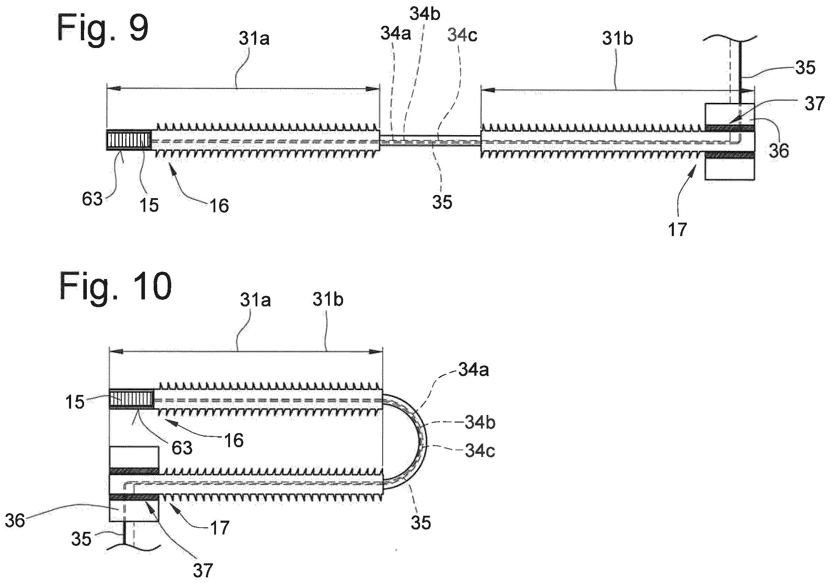

Die Figuren 9 und 10 zeigen, dass die Prüflanze 14 gemäß einem besonderen Aspekt der Erfindung in mehrere Segmente 31a, 31b unterteilbar ist. Figur 10 zeigt, dass die Segmente 31a, 31b zusammengeklappt eine komprimierte, und axial kurzbauende Transportmöglichkeit bereitstellen. Die etwa 200 cm lange Prüflanze kann also auf etwa 1 m verkürzt in einen Transportzustand verbracht werden.

Die beiden Segmente 31a, 31b können über eine nicht dargestellte mechanische Verbindungseinrichtung, z.B. eine Schraubverbindung, oder eine Steckverbindung miteinander gekoppelt und auf einfache Weise aneinander befestigt werden. Die innerhalb der Prüflanze 14 geführten Leitungen 34a, 34b, 34c und der Schlauch 35 können entlang einem flexibel gehaltenen, gebogenen Abschnittes geführt werden. Hierzu kann innerhalb der Prüflanze 14 z.B. auch eine federbelastete Flaschenzuganordnung vorgesehen sein, um für eine entsprechende Straffung der Leitungen 34 und des Schlauches 35 zu sorgen.

Diese Straffungseinrichtung ist in den Figuren der Übersichtlichkeit halber nicht dargestellt.

Das Ausführungsbeispiel der Vorrichtung 10 gemäß den Zeichnungen offenbart einen Prüfkopf 15, ohne auf die besondere Ausgestaltung von Sender und/oder Empfänger der Schallwellen einzugehen. Sender und/oder Empfänger sind mit 32 bezeichnet.

Insbesondere können der Sender und der Empfänger zu einer Baueinheit zusammengefasst sein. Der Prüfkopf 15 kann mehrere Sender und/ oder mehrere Empfänger umfassen.

Das Ausführungsbeispiel zeigt Prüfköpfe 15, die zur Ankopplung und/ oder Auskopplung der Signale von den Prüfköpfen an die Hohlwelle 11 einen Ölfilm vorsehen. Von der Erfindung sind auch Vorrichtungen mit anderen Prüfköpfen umfasst, die ohne eine solche Öl-Ankopplung auskommen.

Ein weiterer besonderer Aspekt der erfindungsgemäßen Vorrichtung ist eine in Figur 4 angedeutete und mit dem Bezugszeichen 46 versehene Entkopplungsvorrichtung.

Zuvor wurde beschrieben, dass eine Rotationsbewegung der Prüflanze 15 zwingend eine Axialverlagerung der Prüflanze 14 zur Folge hat, da die Schraubmutter 44 axial fest angeordnet ist.

Figur 6 zeigt, dass die Schraubmutter 44 mehrere einzelne Segmente 51a, 51b, 51c umfasst.

Die Vorrichtung umfasst eine Entkopplungsvorrichtung 46, die in der Lage ist, die Schraubmutter 44 aus einem Kopplungszustand gemäß Figur 6 in einen Entkopplungszustand gemäß Figur 7 zu überführen.

Gemäß Figur 7 ist der Innendurchmesser 47 der Schraubmutter 44 gegenüber dem Zustand der Figur 6 vergrößert. Die Schraubmutter 44 ist expandiert. Die Segmente 51a, 51b, 51c sind zumindest geringfügig auseinandergerückt.

In dem Entkopplungszustand der Schraubmutter 44 gemäß Figur 7 kann die Prüflanze 14 in Axialrichtung 25 durch die Schraubmutter 44 hindurchbewegt werden, ohne dass ihr Außengewinde 43 mit dem Innengewinde 45 der Schraubmutter 44 in Eingriff gerät. Die Prüflanze 14 ist also axial frei verschieblich in dem Grundkörper 20 angeordnet.

Der Mitnehmer 39 ist ebenfalls axial frei verschieblich in der Axialnut 42 angeordnet.

Eine Expansion der Schraubmutter 44 kann durch Betätigung der Entkopplungsvorrichtung 46 erreicht werden. Hierzu deutet Figur 4 eine Wirkleitung 52 an. Infolge einer Betätigung der Entkopplungsvorrichtung 46 kann auf elektrische und/ oder mechanische Weise die Schraubmutter 44 angesprochen werden und aus ihrem Kopplungszustand gemäß Figur 6 in ihren Entkopplungszustand gemäß Figur 7 überführt werden.

Durch nochmalige Betätigung der Entkopplungsvorrichtung 46 oder durch Loslassen der Entkopplungsvorrichtung 46 kann die Schraubmutter 46 aus ihrem Entkopplungszustand gemäß Figur 7 unmittelbar wieder in ihren Kopplungszustand gemäß Figur 6 überführt werden. Hierzu können in den Figuren 6 und 7 nicht dargestellte Federelemente vorgesehen werden.

Angemerkt sei, dass die Schraubmutter 44, um einen expandierten Entkopplungszustand nehmen zu können, einen gewissen Bewegungsraum benötigt, der in den Zeichnungen nicht dargestellt ist, der dem Fachmann aber selbstverständlich ist.

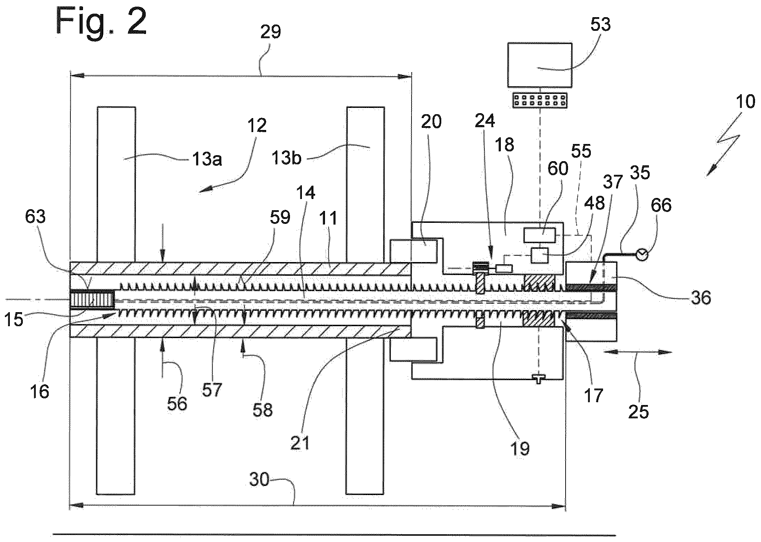

Eine Betätigung der Entkopplungsvorrichtung 46 ermöglicht auch, dass die Prüflanze 14 zunächst initial in die Vorrichtung 10 eingesteckt wird und bis zum linken Ende der Hohlwelle 11, einen Zustand gemäß Figur 2 erreichend, eingeschoben wird. Wenn dieser Zustand erreicht ist, kann ausgehend von Figur 2 die Messung beginnen und dabei die Prüflanze 14 fortwährend durch den Drehantrieb 38, 39, 40, 41 aus der Hohlwelle 11 herausgezogen werden, also bezogen auf die Figur 2 nach rechts verlagert werden. Im Verlauf der Messungen können dann sukzessive Messzustände gemäß den Figuren 2 und 1 erreicht werden. Hier wird die Prüflanze 14 also während der Messung gezogen. Hierbei handelt es sich um ein übliches Messverfahren.

Alternativ kann aber die Prüflanze 14 auch auf Schub beansprucht eine Messung durchführen.

Der Elektromotor 38 kann hierfür links und rechts drehend ausgebildet sein und durch Wahl des entsprechenden Drehsinnes die gewünschte Axialverlagerung der Prüflanze 14 bewirken.

Bei dem Ausführungsbeispiel der Figur 1 ist eine Drehdurchführung 36 zu sehen, die frei am hinteren Ende 17 der Prüflanze 14 angeordnet ist.

Die Drehdurchführung 36 sitzt auf dem hinteren Ende 17 der Lanze 14 auf. Die Lanze 14 ist in der Drehdurchführung 46 frei drehbar. Hierzu verfügt die Drehdurchführung 36 über ein Lager, insbesondere über eines oder mehrere Kugellager. Die Drehdurchführung 36 ermöglicht eine Verbindung des Prüfkopfes 15 über elektrische Leitungen mit der Steuerung 48 und mit einer entsprechenden Spannungsversorgung 66 und ermöglicht auch eine Verbindung des Prüfkopfes 15 mit einer außerhalb der Drehdurchführung 36 angeordneten, angedeuteten Ölpumpe.

Die Drehdurchführung 36 verfügt also über eine Drehkupplung mit Schleifkontakten, und über eine fluidische Drehkopplung, für die Ölleitung 35.

Bei dem Ausführungsbeispiel der Figur 1 ist die Steuerung 48 der Vorrichtung 10 in dem Grundkörper 18 angeordnet.

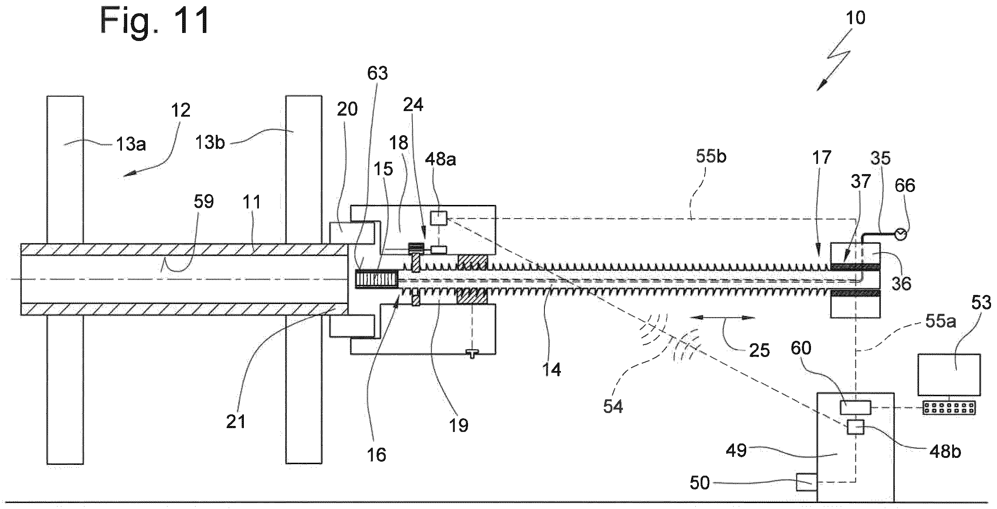

Von der Erfindung sind auch Ausführungsbeispiele umfasst, die, wie dies Figur 11 andeutet, über ein gesondertes Beistellgerät 49 verfügen. Gemäß Figur 11 ist eine Steuerung 48b in dem Beistellgerät 49 angeordnet. Das Beistellgerät 49 kann über eine Anschlussleitung 55a über die Drehdurchführung 36 mit dem Prüfkopf 15 verbunden sein.

Zugleich kann auch bei diesem Ausführungsbeispiel im Grundgerät 20 eine Steuerung 48a angeordnet sein, die mit dem Antrieb 24 zusammenwirkt.

Die Steuerung 48b des Beistellgerätes 49 kann z.B. auch über eine unmittelbare Datenverbindung 54 mit der Steuerung 48a des Grundgerätes 20 kommunizieren. Die Datenverbindung 54 kann drahtlos oder kabelgebunden sein.

Eine Kommunikation zwischen der Steuerung 48b des Beistellgerätes 49 und der Steuerung 48a des Grundgerätes 20 kann auch über die Anschlussleitungen 55a, 55b erfolgen.

In diesem Falle kann auf eine gesonderte Datenverbindung 54 verzichtet werden.

Eine Anzeige oder ein Display 50 kann bei dem Ausführungsbeispiel der Figur 11 auch zusätzlich oder ausschließlich an dem Beistellgerät 59 angeordnet sein.

Die Gesamtmasse der verwendeten Komponenten, einschließlich Adapter 20, Grundkörper 18, Prüflanze 14 und gegebenenfalls Beistellgerät 49 kann derartig gering gehalten werden, dass ein Gewicht der Gesamtvorrichtung 10 von 15 kg, insbesondere von 10 kg nicht überstiegen wird.

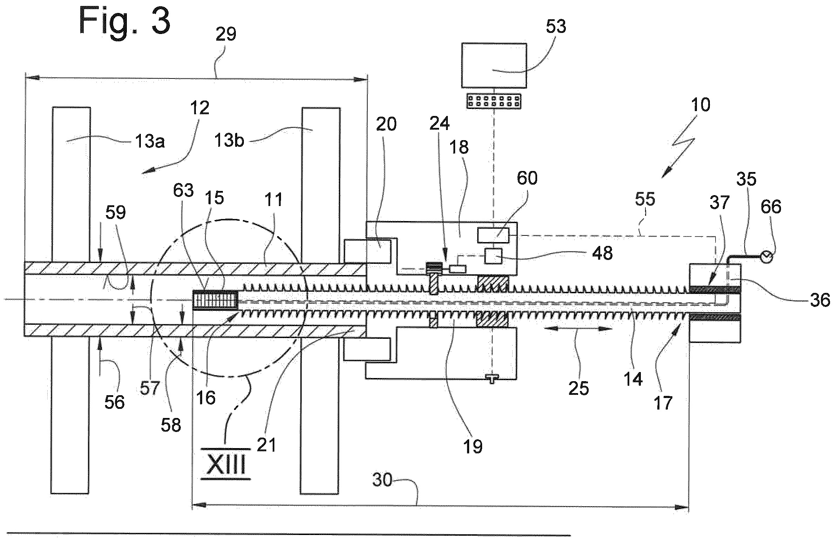

Figur 13 zeigt in einer gegenüber Figur 3 geänderten, präzisierten, konkretisierten und detaillierten Darstellung einen Verbindungsbereich von Prüfkopf 15 mit Einsteckende 16 der Prüflanze 14 und die Hohlwelle 11. Dieser Bereich ist in Figur 3 etwa mit dem Teilkreis XIII bezeichnet.

In Abweichung von der Darstellung der Figur 3, und auch in Abweichung von den übrigen Darstellungen der Figuren 1 bis 12 wird in den nachfolgend zu beschreibenden Figuren 13 bis 21 konkret dargestellt, dass der Prüfkopf 15 eine größere radiale Erstreckung aufweist, sodass er bis an die Innenumfangsfläche 59 der Hohlwelle 11 heranragt.

Figur 13 zeigt das Einsteckende 16 der Prüflanze 14, eine für das Verständnis der vorliegenden Erfindung wesentliche Einrichtung 78 zur radialen Entkopplung des Einsteckendes 16 von dem Prüfkopf 15, und den Prüfkopf 15 selbst.

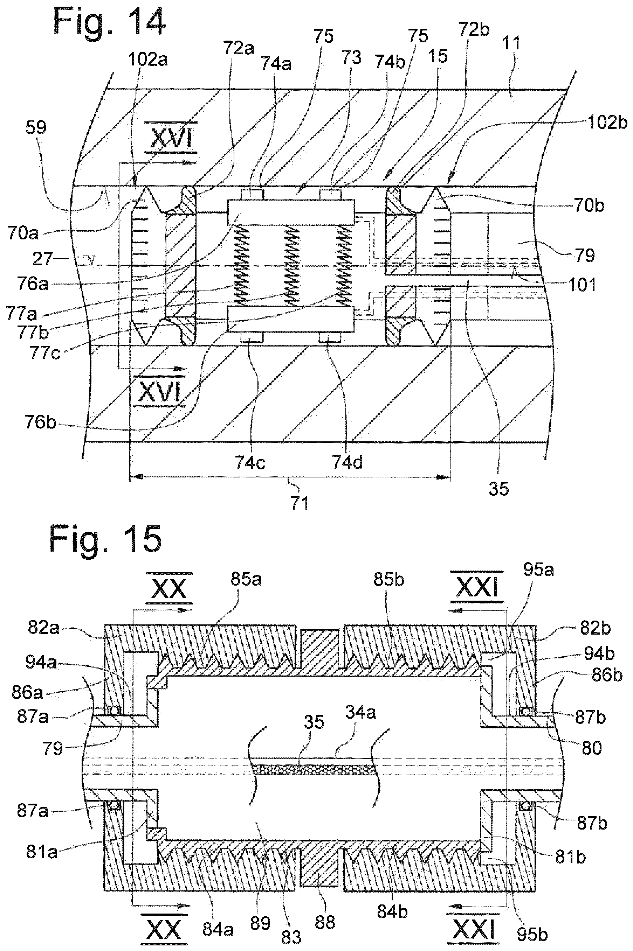

Zunächst soll anhand der Figur 14, in Einzeldarstellung des in Figur 13 mit XIV bezeichneten Teilkreises der Prüfkopf 15 erläutert werden.

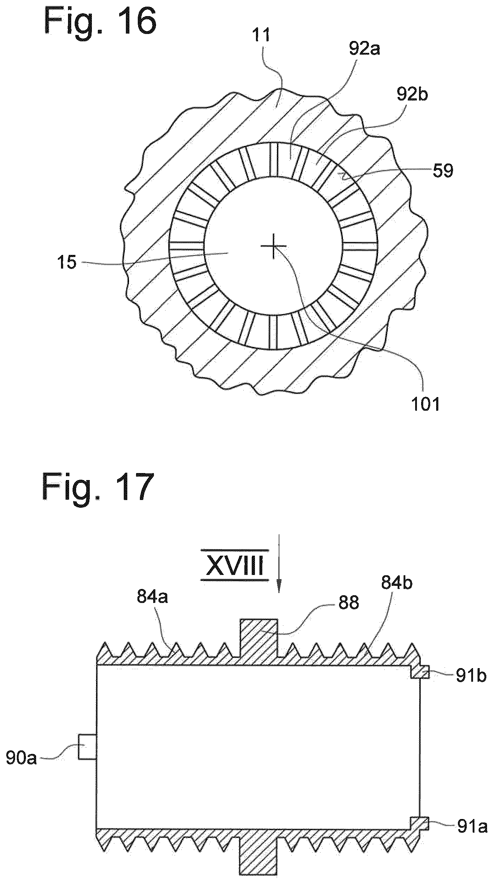

Der Prüfkopf 15 weist eine axiale Länge auf, die mit 71 bezeichnet ist. An seinen beiden axialen Endbereichen 102a,102b weist der Prüfkopf 15 der erfindungsgemäßen Vorrichtung 10 jeweils Zentriermittel 70a, 70b auf. Die Zentriermittel 70a, 70b sind in den Figuren 14 und 16 nur schematisch dargestellt. Sie umfassen bei dem Ausführungsbeispiel der Figuren 14 und 16 eine Vielzahl von Federlaschen 92a, 92b, die mit ihrem radial inneren Ende fest an dem Prüfkopf 15 angebunden sind, und die mit ihrem radial äußeren, freien Ende an der Innenumfangsfläche 59 federvorbelastet anliegen.

Die Federlaschen 92a, 92b sind kreisringförmig um die Mittellängsachse 101 des Prüfkopfes 15 herum angeordnet.

Insbesondere sind die Federlaschen 92a, 92b rotationssymmetrisch um die Mittellängsachse 101 des Prüfkopfes 15 angeordnet.

Das Ausführungsbeispiel der Figur 16 zeigt 20 Federlaschen 92a, 92b. Die Zahl der Federlaschen 92a, 92b bleibt freilich dem Fachmann überlassen.

Auch andere, eine Vorspannung erzeugende Federelemente können eingesetzt werden.

Sowohl bei einer Axialbewegung des Prüfkopfes 15 relativ zu der Hohlwelle 11, als auch bei einer gleichzeitigen Drehbewegung des Prüfkopfes 15 um seine Mittellängsachse 101 relativ zu der Hohlwelle 11, ermöglichen Zentriermittel eine mittige Positionierung des Prüfkopfes 15 relativ zu der Hohlwelle 11.

Anders ausgedrückt ermöglichen diese beiden Federlaschenkränze 70a, 70b insbesondere während der gesamten Messung eine zentrale Positionierung der Mittellängsachse 101 des Prüfkopfes 15, relativ zu der Mittellängsachse 27 der Hohlwelle 11.

Der Prüfkopf 15 umfasst darüber hinaus zwei axial voneinander beabstandete Öldichtungen 72a, 72b, die zwischen sich eine Ölkammer 73 definieren und begrenzen.

Die beiden Öldichtungen 72a, 72b können ebenfalls unter Ermöglichung einer Axial- und Rotationsbewegung des Prüfkopfes 15, relativ zur Hohlwelle 11 die Ölkammer 73, öldicht gegenüber dem Außenraum abdichten.

Der Prüfkopf 15 umfasst Schallwandler 74a, 74b, 74c, 74d, die Schallsignale, unter Zwischenschaltung eines Ölfilms 75 in das Material der Hohlwelle 11 einkoppeln und daraus auskoppeln.

Die Schallwandler 74a, 74b, 74c, 74d sind auf zwei Trägern 76a, 76b angeordnet, die in Radialrichtung nach außen, unter Zuhilfenahme von Federn 77a, 77b, 77c, vorgespannt sind.

Die Anordnung der Schallwandler 74a, 74b, 74c, 74d auf Trägern 76a, 76b, die in Radialrichtung paarweise und gegenläufig nach außen gegen die Innenumfangsfläche 59 der Hohlwelle 11 vorgespannt sind, ermöglicht eine weitere Zentrierung.

Ziel dieser Konstruktion ist es, die Schallwandler 74a, 74b, 74c, 74d möglichst dicht und gleichmäßig, mit geringstmöglichen Abweichungen in Folge der axialen Rotationsbewegung des Prüfkopfes 15, relativ zur Hohlwelle 11 an der Innenumfangsfläche 59 der Hohlwelle 11 entlang zu führen.

Wie eingangs beschrieben, kann in Folge einer Rotationsbewegung der Prüflanze 14 aufgrund ihrer großen axialen Länge 30 das Einsteckende 16 der Prüflanze 14 radiale Ausschläge erfahren, die in Figur 13 mit dem Doppelpfeil 99 bezeichnet sind.

Aufgrund der lediglich einseitigen Lagerung bzw. Einspannung der Prüflanze 14 im Bereich des Antriebs 24 bzw. der Mutter 44 können an dem freien Einsteckende 16 der Prüflanze 14 ungewünscht große radiale Auslenkungen 99 auftreten.

Wäre das Einsteckende 16 in Radialrichtung gemäß dem Doppelpfeil 99, fest mit dem Prüfkopf 15 verbunden, würden diese radialen Auslenkungen unmittelbar auf den Prüfkopf 15 übertragen werden. Dies hätte zur Folge, dass die Ausschläge des Einsteckendes 16 zu ungewünschten Schwankungen der Anpresskräfte oder Anpressmomente der Schallwandler 74a, 74b, 74c an die Innenumfangsfläche der Hohlwelle 11 führen können. Hierdurch könnten die durchzuführenden Messungen beeinträchtigt werden.

Erfindungsgemäß ist zur Elimination solcher Beeinträchtigungen zwischen dem Einsteckende 16 der Prüflanze 14 und Prüfkopf 15 eine Einrichtung 78 zur radialen Entkopplung angeordnet.

Bei dem Ausführungsbeispiel der Figur 13 ist die Einrichtung 78 zwischen einem axialen Endstück 80 der Prüflanze 14 und einem Axialstück 79, das mit dem Prüfkopf 15 verbindbar ist oder verbunden ist, angeordnet.

Bei dem Ausführungsbeispiel ist vorgesehen, dass zwischen dem Prüfkopf 15 und dem Axialstück 79 eine nicht dargestellte lösbare Steckverbindung vorgesehen wird. Das Axialstück 79 kann lösbar oder auch unlösbar mit dem Prüfkopf 15 verbunden sein.

Figur 15 erläutert in einer schematischen Darstellung, dass das axiale Endstück 80 der Prüflanze 14 einen Ringbund 81b aufweist.

Gleichermaßen weist das Axialstück 79 einen Ringbund 81a auf.

Die beiden Ringbunde 81a, 81b sind voneinander axial beabstandet und definieren zwischen sich einen Freiraum.

In diesem Freiraum ist als Bestandteil der Einrichtung 78 ein Element 83 angeordnet, das im Folgenden als Kardanbuchse bezeichnet wird.

Die Kardanbuchse 83 ist ein im Wesentlichen kreiszylindrischer Hohlkörper, der einen zentralen Ringbund 88 aufweist, an den sich zwei Außengewinde 84a, 84b anschließen.

Die Figuren 15 sowie 17 bis 21 verdeutlichen, dass an den axialen Endbereichen der Kardanbuchse 83 Zapfen 90a, 90b und Zapfen 91a, 91b angeordnet sind.

Die Kardanbuchse 83 wird unter Zuhilfenahme von zwei Überwurfmuttern 82a, 82b, die jeweils ein Innengewinde 85a, 85b aufweisen, festgelegt.

Die Überwurfmutter 82a weist einen nach innen gerichteten Ringstirnbund 86a und die Überwurfmutter 82b weist einen nach innen gerichteten Ringstirnbund 86b auf. Optional können Dichtungen 87a, 87b, den jeweiligen Ringstirnbund 86a, 86b mit der Prüflanze 14 bzw. mit dem Prüfkopf 15 verbinden.

Die Kardanbuchse 83 ist hohl ausgebildet und weist einen Innenraum 89 auf. Dieser wird von den elektrischen Leitungen 34a, 34b, 34c und dem Ölschlauch 35 durchgriffen. Die Leitungen 34a, 34b, 34c, aber auch der Ölschlauch 35, können mit einer gewissen Lose versehen sein, so dass die nachfolgend zu erläuternden Bewegungen der Kardanbuchse 83 relativ zur Prüflanze 14 sowie relativ zum Prüfkopf 15 aufgefangen werden können.

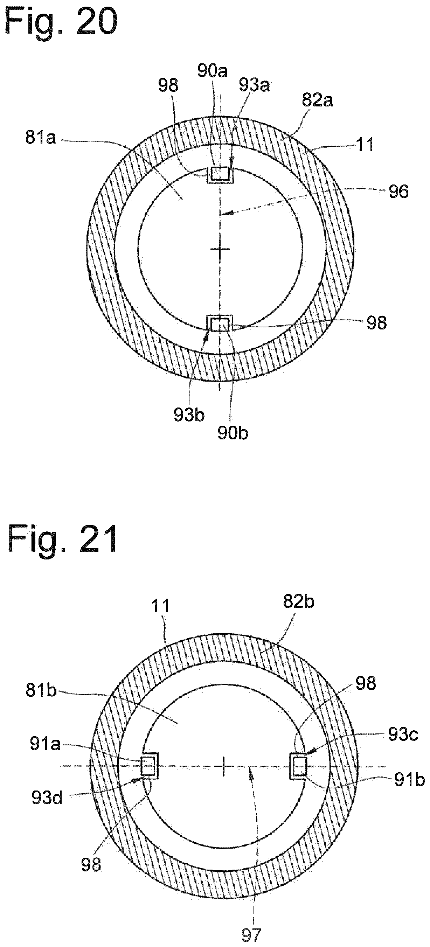

Wie sich aus den Figuren 20 und 21 ergibt, ist in dem entsprechenden Ringbund 81a, 81b jeweils ein Paar von Aufnahmen 93a, 93b, 93c, 93d angeordnet. In diese Aufnahmen greifen die steckerartigen Zapfen 90a, 90b, 91a, 91b ein. Die Aufnahmen 93a, 93b, 93c, 93d sind etwas größer als die Querschnitte der Zapfen 90a, 90b, 91a, 91b ausgebildet, so dass ein gewisser Bewegungsfreiraum entsteht.

Zunächst ist deutlich, dass die Kardanbuchse 83 in Drehrichtung um die Mittellängsachse 27 der Prüflanze 14 von der angetriebenen Prüflanze 14 mitgenommen wird und ihrerseits auch das Axialstück 79 in Drehrichtung mitnimmt.

Andererseits ist die Kardanbuchse 83 schwimmend zwischen der Prüflanze 14 und dem Prüfkopf 15 gelagert.

Die Kardanbuchse 83 ist aufgrund des in Fig. 15 lediglich angedeuteten Axialfreiraums 94a, 94b in einem kleinen Bereich, relativ zu dem Endstück 80 und relativ zu dem Axialstück 79 axial verschieblich angeordnet. Sie ist darüber hinaus aufgrund der angedeuteten Radialfreiräume 95a, 95b auch in Radialrichtung in gewissen Grenzen radial beweglich zu dem Endstück 80 und dem Axialstück 79 angeordnet.

Darüber hinaus lässt die spielbehaftete Anordnung der Kardanbuchse 83 an den beiden Ringbunden 81a, 81b eine gewisse relative Schwenkbarkeit zu. Beispielsweise kann die Kardanbuchse 83 entlang der in den Figuren 20 und 21 mit den Bezugszeichen 96 und 97 bezeichneten Schwenkachsen einen gewissen Winkelversatz relativ zu der Prüflanze 14 und/ oder relativ zu dem Prüfkopf 15 erfahren.

Die beiden Zapfen 90a, 90b können z.B. gemeinsam eine erste Drehachse 96 definieren und die beiden Zapfen 91a, 91b können gemäß Figur 21 eine zweite Drehachse 97 definieren.

Eine Verschwenkbarkeit der Kardanbuchse 83 um die Drehachse 96 relativ zu dem Axialstück 79 um nur wenige Grad, z.B. 1° bis 5°, genügt für eine radiale Entkopplung. Auch eine Schwenkbarkeit der Kardanbuchse 83 relativ zu dem Endstück 80 um die in Fig. 21 Drehachse 97 um nur wenige Grad, z.B. um nur 1° bis 5°, genügt, um die gewünschte Radialentkopplung des Prüfkopfes 15 von dem Einsteckende 16 der Prüflanze 14 bei radialen Ausschlägen des Einsteckendes 16 der Prüflanze 14 zu gewährleisten.

Bezogen auf die Darstellung der Fig. 13 erreicht die erfindungsgemäße Einrichtung 78 zur radialen Entkopplung, dass die radialen Ausschläge des freien Endes 16 der Prüflanze 14, veranschaulicht durch den Doppelpfeil 99 in Fig. 13, gegenüber der radialen Auslenkung des Endstückes 79, veranschaulicht durch den kürzeren Doppelpfeil 100, reduziert oder wünschenswerterweise vollständig beseitigt werden.

Dadurch, dass der Prüfkopf 15 über seine beiden Zentriermittel 70a, 70b entlang der Innenumfangsfläche der Hohlwelle 11 geführt ist, kann der Prüfkopf 15 axial verlagert und rotiert werden, ohne durch Unwuchten und/ oder radiale Ausschläge aufweisende Rotationsbewegung des Einsteckendes 16 von Prüflanze radial mitgenommen zu werden. Gleichzeitig ist der Prüfkopf 15 aber drehschlüssig - und im Übrigen auch axial fest - mit Ausnahme eines gewissen Axialspiels - mit der Prüflanze 14 verbunden. Diese schwimmende Lagerung der Kardanbuchse 83 relativ zu der Prüflanze 14 sorgt für die gewünschte radiale Entkopplung.

## Patentansprüche

1. Vorrichtung (10) zur Ultraschallprüfung von Hohlwellen (11), insbesondere von Hohlwellen von Eisenbahn-Radsätzen (12), umfassend eine einen Ultraschall-Prüfkopf (15) mit Schallwandlern (74a, 74b) aufweisende, mit einem Einsteckende (16) voran in die Hohlwelle (11) einsteckbare Prüflanze (14), die mittels eines Antriebs (24) in Axialrichtung (25) entlang der Hohlwelle (11) verlagerbar ist, und die bei ihrer Axialverlagerung eine Rotation erfährt, wobei der Ultraschall-Prüfkopf (15) drehschlüssig mit der Prüflanze (14) verbunden ist, wobei die Schallwandler (74a, 74b) unter Zuhilfenahme von Zentriermitteln (70a, 70b) entlang einer Innenumfangsfläche (59) der Hohlwelle (11) geführt sind, und wobei zwischen dem Einsteckende (16) der Prüflanze (14) und dem Ultraschall-Prüfkopf (15) eine Einrichtung (78) zur radialen Entkopplung des Einsteckendes (16) von dem Ultraschall-Prüfkopf (15) angeordnet ist.

2. Vorrichtung (10) nach Anspruch 1, **dadurch gekennzeichnet, dass** die Zentriermittel (70a, 70b) wenigstens zwei, axial voneinander beabstandete Federmittel (70a, 70b), insbesondere Federlaschenkränze, umfassen, zwischen denen die Schallwandler (74a, 74b) angeordnet sind.

3. Vorrichtung (10) nach Anspruch 1 oder 2, **dadurch gekennzeichnet, dass** die Federmittel (70a, 70b) Federlaschen (92a, 92b, 92c) umfassen, die sich an der Innenumfangsfläche (59) der Hohlwelle (11) abstützen.

4. Vorrichtung (10) nach einem der vorangegangenen Ansprüche, **dadurch gekennzeichnet, dass** die Schallwandler (74a, 74b), insbesondere paarig, unter Zuhilfenahme von in Radialrichtung wirkenden Federn (77a, 77b, 77c) auf die Innenumfangsfläche (59) der Hohlwelle (11) hin vorgespannt sind.

5. Vorrichtung (10) nach einem der vorangegangenen Ansprüche, **dadurch gekennzeichnet**, der Ultraschall-Prüfkopf (15) zur Ankopplung der Schallwandler (74a, 74b) eine Ölkammer (73) umfasst.

6. Vorrichtung (10) nach einem der vorangegangenen Ansprüche, **dadurch gekennzeichnet, dass** der Ultraschall-Prüfkopf (15) eine Öldurchführung umfasst.

7. Vorrichtung (10) nach einem der vorangegangenen Ansprüche, **dadurch gekennzeichnet, dass** die Zentriermittel (70a, 70b) zur mittigen Positionierung des Ultraschall-Prüfkopfes (15) in der Hohlwelle (11) ausgebildet sind.

8. Vorrichtung (10) nach einem der vorangegangenen Ansprüche, **dadurch gekennzeichnet, dass** die Zentriermittel (70a, 70b) an den beiden axialen Endbereichen des Ultraschall-Prüfkopfes (15) angeordnet sind.

9. Vorrichtung (10) nach einem der vorangegangenen Ansprüche, **dadurch gekennzeichnet, dass** die Einrichtung (78) eine kardanische Kupplung (83), insbesondere eine doppelkardanische Kupplung, umfasst.

10. Vorrichtung (10) nach Anspruch 9, **dadurch gekennzeichnet, dass** die Einrichtung (78) einen Buchsenkörper (83) umfasst, der schwimmend an der Prüflanze (14) gelagert ist.

11. Vorrichtung (10) nach Anspruch 10, **dadurch gekennzeichnet, dass** der Buchsenkörper (83) einen Durchtrittskanal für elektrische Leitungen (34a, 34b, 34c) und/oder für einen Ölschlauch (35) umfasst.

12. Vorrichtung (10) nach einem der Ansprüche 10 oder 11, **dadurch gekennzeichnet, dass** der Buchsenkörper (83) in Axialrichtung (25) an der Prüflanze (14) und/ oder an dem Prüfkopf (15) unter Bereitstellung axialen Spiels unter/oder unter Bereitstellung radialen Spieles und/oder unter Ermöglichung von Winkelversatz gesichert ist.

13. Vorrichtung (10) nach einem der Ansprüche 10 bis 12 **dadurch gekennzeichnet, dass** der Buchsenkörper (83) ein erstes Schraubgewinde (84b) für eine erste Überwurfmutter (82b) zur axialen Sicherung an der Prüflanze (14) und ein zweites Schraubgewinde (84a) für eine zweite Überwurfmutter (82a) zur axialen Sicherung an dem Prüfkopf (15) umfasst.

14. Vorrichtung (10) nach einem der Ansprüche 10 bis 13, **dadurch gekennzeichnet, dass** der Buchsenkörper (83) an seinen beiden axialen Endbereichen jeweils zwei axial vorstehende Zapfen (90a, 90b, 91a, 91b) aufweist, die unter Bereitstellung von Spiel oder Winkelversatz in Ausnehmungen (93a, 93b, 93c, 93d) eines fest relativ zu der Prüflanze angeordneten bzw. fest relativ zu dem Prüfkopf angeordneten Ringbundes (81a, 81b) eintauchen.

15. Vorrichtung (10) nach einem der vorangegangenen Ansprüche, **dadurch gekennzeichnet, dass** diese einen Grundkörper (18) mit einem Tunnel (19) aufweist, durch den hindurch die Prüflanze (14) führbar ist, und einen Adapter (20) mit einem Befestigungsabschnitt (22) zur Festlegung an einem axialen Endbereich (21) der Hohlwelle (11) und mit einem Aufnahmeabschnitt (23), über den der Grundkörper (18) relativ zu der Hohlwelle (11) festlegbar ist, wobei der Grundkörper (18) einen Antrieb (24) aufweist, mit dem eine Axialverlagerung der Prüflanze (14) bewerkstelligbar ist.
